# EUROPEAN PATENT SPECIFICATION

(11) **EP 0 216 649 B1**
(45) Date of publication and mention of the grant of the patent: **21.07.1993**
(21) Application number: 86401693.6
(22) Date of filing: 29.07.1986
(51) Int. Cl.: C01B 33/113, C01G 25/02, C01F 7/38, C01F 11/12, B01J 3/00, B01J 8/02, B01J 8/08

(54) **Method and system for manufacturing fine-grained silicon monoxide**
Verfahren und Vorrichtung zum Herstellen von feinkörnigem Siliciummonoxid
Procédé et appareil pour la fabrication de monoxyde de silicium à grain

(30) Priority: 29.07.1985 JP 165676/85
(43) Date of publication of application: 01.04.1987
(73) Proprietor: KAWASAKI STEEL CORPORATION, Chuo-Ku, Kobe-City Hyogo 651 (JP)
(72) Inventor: Funahashi, Toshihiko Kawasaki Steel Corp., Chiba-shi Chiba-ken (JP); Ueda, Kenichi Kawasaki Steel Corp., Chiba-shi Chiba-ken (JP); Uchimura, Ryoji Kawasaki Steel Corp., Chiba-shi Chiba-ken (JP); Oguchi, Yukio Kawasaki Steel Corp., Chiba-shi Chiba-ken (JP)
(74) Representative: Nony, Michel

(56) References cited:
- DE-A- 2 139 446
- FR-A- 1 132 075
- PATENT ABSTRACTS OF JAPAN, vol. 8, no. 85 (C-219)[1522], 18th April 1984

## Description

### BACKGROUND OF THE INVENTION

The present invention relates generally to a method and a device for effectively manufacturing fine-grained solid-state silicon monoxide (SiO). More specifically, the invention relates to a method for producing fine SiO of grain size less than or equal to 1 µm in a form of amorphous at substantially high yield and a system for effectively implementing the process of the invention. Further, particularly, the invention relates to a method and a device for producing fine SiO, which is industrially applicable.

Fine-grained SiO powder is known as very attractive material in the recent fine ceramic industries. For example, such fine-grained SiO is known as a material for Si₃N₄,SiC or so forth. Especially, substantially fine-grained SiO, such as that having a grain size of less than or dual to 1 µm is substantially active and thus useful as a material for ceramics.

Japanese Patent Second (examined) Publication 59-50601 discloses a production of fine-grained SiO powder. In the disclosed process, a mixture of silicon dioxide (SiO₂) and carbon (C) or SiO₂ and metallic silicon (Si) is heated at a temperature higher than or equal to 1500^{o}C under reduced pressure to cause thermal reaction for generating SiO vapor. The generated SiO vapor is condensed into fine-grained solid-state SiO powder of grain size of 1 µm in amorphous form by causing adiabatic expansion in nitriding or carbonizing reduction atmosphere or pressure-reduced oxygen atmosphere.

Such conventional production process for SiO is suitable for producing a small amount of fine SiO powder. However, when a large amount of SiO powder has to be produced, the conventional process and system encounter difficulties. For example, condensation of vapor-state SiO tends to be caused in a transporting duct or pipe for transporting the SiO vapor to a chamber in which adiabatic expansion takes place. Condensation of SiO in the transporting duct causes accumulation of solid-state SiO in the duct and results in blocking of the duct. Furthermore, the nozzle for discharging SiO vapor into the adiabatic expansion chamber tends to be subject to corrosion by SiO vapor and tends to be blocked by solid-state SiO condensed and accumulated in the nozzle.

Therefore, the process and system proposed in the aforementioned Japanese Patent Publication is considered as limited for laboratory use and is, indeed, not applicable for industries.

In such atmosphere, although SiO has been known as one of important materials in ceramics industries, there has been no way for manufacturing large amount of fine-grained SiO powder.

### SUMMARY OF THE INVENTION

Therefore, it is the principle object of the present invention is to provide a method and a device for producing fine-grained SiO powder, which is applicable for manufacture and adapted to effectively produce a large amount of SiO powder.

Another object of the invention is to provide a mass-production process and device for fine-grained SiO powder, which can perform SiO producing process continuously.

A further object of the invention is to provide a method and device for producing SiO powder, which does not include a step of adiabatic expansion in condensing vapor-state SiO into solid-state SiO.

In order to accomplish the aforementioned and other objects, the invention provides a method for manufacturing fine-grained SiO powder as claimed in claim 1.

Preferably, flow of the non-oxidizing gas is generated by maintaining the pressure at the position where thermal reaction to generate SiO vapor occurs at substantially low pressure. Such gas flow serves as carrier medium for transferring vapor-state SiO and/or fine-grained SiO powder to a SiO collection chamber. This successfully prevent the SiO from being condensed and accumulated in a transfer pipe or duct and thus preventing the pipe or duct from being blocked. Furthermore, substantially low pressure atmosphere encourages SiO vapor generation from the reagent mixture and requires lower heating temperature to cause SiO vapor generation.

Preferably, the heat-treatment for the material reagent mixture is performed in a temperature range of 1300^{o}C to 2000^{o}C.

Preferably, as the SiO₂ containing material, zircon, mullite, wollastonite and so forth is used. In such case, a by-product, such as zirconia, alumina, calcia and so forth of substantially high purity can be simultaneously produced. As the carbon containing material, petroleum coke, coal pitch, carbon-black, organic resin and so forth is used. Furthermore, as the non-oxidizing gas, N₂ gas, Ar gas, CO gas and so forth is used.

In order to accomplish the aforementioned object, the invention provides a SiO producing device as claimed in claim 10

The device comprises a furnace defining a chamber in which a material reagent mixture is heated at a predetermined temperature for generating SiO vapor. The heat-treatment is performed under non-oxidizing atmosphere and under substantially low pressure. The substantial low pressure is achieved into the reaction chamber through an associated SiO collection chamber. the achievement of substantially low pressure through the SiO collection chamber causes flow of non-oxidizing gas from the reaction chamber to the SiO collecting chamber. This non-oxidizing gas flow is used as carrier medium for the SiO vapor generated in the reaction chamber or the fine-grained SiO condensed from the SiO vapor.

In the preferred construction, a non-oxidizing gas source is connected to the reaction chamber for continuously supplying the non-oxidizing gas so as to maintain the atmosphere of the reaction chamber in substantially non-oxidizing atmosphere.

Further preferably, the SiO producing device includes supply of material reagent mixture in a manner that allows continuous operation of the system for mass-production of the fine-grained SiO powder.

In addition, the device is provided with means for collecting material from which the SiO is removed. Such remained material (for example, zirconia calcia, alumina) constitutes a by-product of substantially high purity.

The SiO₂ containing material is selected from zircon (ZrO₂.SiO₂), mullite (3Aℓ₂O₃.2SiO₂), wollastonite (CaO.SiO₂) and SiO₂ powder of high purity. The C containing material is selected from petroleum coke, coal pitch, carbon-black and organic resin. In addition, the non-oxidizing gas is selected from N₂ gas, Ar gas and CO gas.

The claimed method may further include a step of collecting remaining material mixture as by-product after removing the SiO. The by-product to be obtained is zirconia (ZrO₂) of high purity when the SiO₂ containing material is zircon. On the other hand, when the SiO₂ containing material is mullite (3Aℓ₂O₃.2SiO₂), the by-product obtainable from the aforementioned process is alumina (Aℓ₂O₃) of high purity. Further, when the SiO₂ containing material is wollastonite (CaO.SiO₂), the by-product to be obtained is calcia (CaO) of high purity.

In order to implement the aforementioned method, a device in another aspect of the invention comprises means for heating a material mixture as a mixture of a SiO₂ containing material and a metallic Si and/or C containing material, under non-oxidizing and substantially low pressure atmosphere for generating vapor-state SiO, and means for condensing the vapor-state SiO into fine-grained solid-state SiO in gaseous state and collecting the condensed fine-grained solid-state SiO.

According to a further aspect of the invention, the aforementioned method is applied to the industrial process for manufacturing fine-grained SiO powder, which process as claimed in claim 12 comprises the steps of:
preparing a material mixture by mixing a SiO₂ containing material and a metallic Si and/or C containing material;
continuously supplying the material mixture into a reaction chamber;
heating the material mixture in the reaction chamber under the presence of non-oxidizing gas and substantially low pressure atmosphere, for generating vapor-state SiO;
transferring generated vapor-state SiO to a collecting chamber; and
cooling the vapor state SiO for causing condensation under the presence of the non-oxidizing gas and collecting condensed fine-grain SiO.
Supply of the material mixture is performed intermittently at a predetermined timing which is determined for allowing continuous operation of the SiO manufacturing process. In the alternative, supply of the material is performed continuously to cause travel of the material mixture through the reaction chamber within a predetermined period of time.

In order to implement aforementioned industrially applied SiO manufacturing process, a device according to a still further aspect of the invention as claimed in claim 18 comprises means for continuously supplying a material mixture prepared by mixing a SiO₂ containing material and a metallic Si and/or C containing material, means for receiving the material mixture from the supply means and heating the material mixture under the presence of non-oxidizing gas and substantially low pressure atmosphere, for generating vapor-state SiO, means for cooling the vapor state SiO for causing condensation under the presence of the non-oxidizing gas and collecting condensed fine-grain SiO powder, and means for transferring generated vapor-state SiO from the heating means to the cooling means.

The device further comprises means for introducing vacuum pressure into the cooling means for generating non-oxidizing gas flow from the heating means to the cooling means for transferring the vapor-state SiO by the gas flow. In order to maintain the atmosphere in the heating means in non-oxidizing condition, the system further comprises means for continuously supplying the non-oxidizing gas into the heating means.

Preferably, the device further comprises means for pre-heating the material mixture before supplying the material mixture into the heating means so that heating of the material mixture can be effectively performed in the heating means.

As set forth, according to the present invention, industrially useful by-product is obtained simultaneously of production of the fine SiO powder. Therefore, the device further comprises means for cooling the material mixture after removing the SiO and collecting the remaining material as a by-product.

The supply means comprises a plurality of carriages adapted to travel through the heating means with the material mixture. The carriages are adapted to stop within the heating means for a predetermined period of time.

Preferably, the carriage mounts thereon a muffle which defines a reaction chamber to receive therein the material mixture and causing thermal reaction to generate the vapor-state silicon oxide therein.

The pre-heating means is provided upstream of the heating means and the cooling and by-product collecting means is provided downstream of the heating means, and the pre-heating means, heating means and the cooling and by-product collecting means are aligned to form a path for the carriages.

In order to facilitate continuous operation, the device is arranged to place one of the carriage within the pre-heating means while the leading carriage stops within the heating means and to place another carriages within the cooling and by-product collecting means while the following carriage stops within the heating means.

Alternatively, the pre-heating means, heating means and the cooling and by-product collecting means defines a continuous path for the material mixture, which path is filled with the material mixture and communicated with the supply means for receiving continuous supply of the material mixture for causing travel of the material mixture within the path through the pre-heating, heating and cooling and by-product collecting means. Preferably, the pre-heating, heating and cooling and by-product collecting means are aligned vertically.

In the latter case, the supply means comprises a hopper communicated with the top of the pre-heating means.

### BRIEF DESCRIPTION OF THE DRAWINGS

The present invention will be understood more fully from the detailed description given herebelow and from the accompanying drawings of the preferred embodiments of the invention, which, however, should not be taken to limit the invention to the specific embodiment or embodiments, but are for explanation and understanding only.

In the drawings:
Fig. 1 is a fragmentary illustration showing one of fundamental structure of a SiO producing device according to the invention;
Fig. 2 is a fragmentary illustration of another fundamental construction of a SiO producing device according to the invention;
Fig. 3 is an electromicroscopic photograph showing yield SiO;
Fig. 4 is a plan view of the preferred embodiment of a SiO manufacturing device according to the invention;
Fig. 5 is a transverse section of the SiO producing device of Fig. 4, in the portion of the heating furnace;
Fig. 6 is a chart showing temperature distribution in the SiO producing device of Figs. 4 and 5;
Fig. 7 is a plan view of another preferred embodiment of a SiO manufacturing device according to the invention;
Fig. 8 is a transverse section of the SiO producing device of Fig. 7, in the portion of the heating furnace;
Fig. 9 is a cross-section of a further preferred embodiment of a SiO producing device according to the invention.

### DESCRIPTION OF THE PREFERRED EMBODIMENT

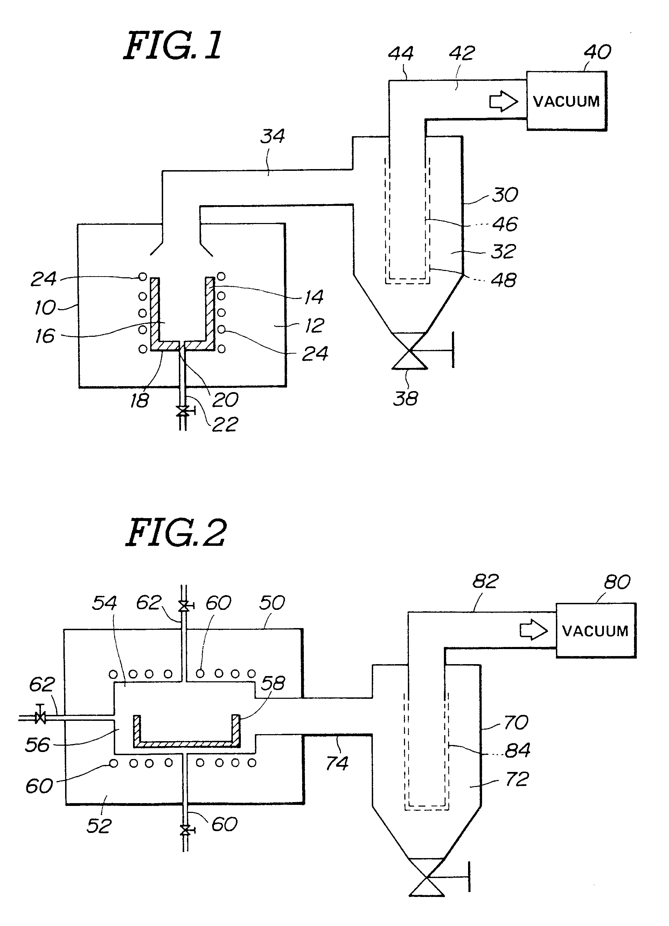

SiO producing devices according to the present invention are generally illustrated in Figs. 1 and 2. In the arrangement of Fig. 1, the SiO producing device comprises a furnace 10 for heat-treating a reagent mixture, a SiO collection device 30 for collecting fine SiO produced by the heat-treatment in the furnace, and a vacuum source 40 for applying vacuum pressure to the furnace and the collection device.

The furnace 10 generally comprises a vacuum furnace for heat-treatment of the reagent mixture under low-pressure conditions. The furnace 10 defines a furnace chamber 12. A reagent mixture container 14 is disposed within the furnace chamber 12. The reagent mixture container 14 may comprise a crucible or the like and is of open-top box or cylindrical configuration. The reagent mixture container 14 defines an internal reaction chamber 16. The bottom 18 of the reagent mixture container 14 has an opening 20 in communication with a non-oxidizing gas induction tube 22 in order to introduce a non-oxidizing gas into the reaction chamber 16 of the reagent mixture container 14. A heater 24, such as a high-frequency coil or resistance-heating heater or so forth, is installed in the furnace chamber 12 so as to surround the reagent mixture container 14.

The SiO collection device 30 defines a SiO collection chamber 32 therein. The SiO collection chamber 32 is connected to the vacuum pressure source 40 through a vacuum passage 42. Therefore, the SiO collection chamber 32 is maintained at a pressure substantially lower than atmospheric pressure. On the other hand, the SiO collection chamber 32 is connected to the furnace chamber 12 of the furnace 10 via a SiO collection duct 34. The SiO collection duct 34 has one end inserted into the furnace chamber 12. A horn-shaped collection hood 36 is installed on one end of SiO collection duct 34. The collection duct 34 is placed above the top opening of the reaction chamber 16 of the reagent mixture container 14. Through the SiO collection duct 34, the vacuum pressure in the collection chamber 32 of the collection device 30 is introduced into the furnace chamber 12 to hold the internal pressure in the furnace chamber substantially lower than atmospheric pressure.

The vacuum passage 42 is defined by a duct 44 which has one end 46 inserted into the SiO collection chamber 32. The end 46 of the duct 44 is covered by a SiO collection filter 48. The filter 48 serves to collect fine SiO particles drawn into the collection chamber through the collection duct 34. The collected fine SiO particles are removed through a valve 38 in the floor of the collection chamber 32.

In the preferred construction, heat-insulating layers are attached to the furnace walls of the furnace 10. Alternatively, it would be possible to provide cooling water passages within the furnace walls for cooling.

Fig. 2 shows another construction of the SiO producing device according to the invention. In this construction, a furnace 50 defines a furnace chamber 52. A muffle 54 is disposed within the furnace chamber 52 to define therein a reaction chamber 56. A reagent mixture container 58 is disposed within the reaction chamber 56. The muffle 54 is surrounded by a heater 60 so as to be heated and induce the reagent mixture to react. One or more non-oxidizing gas introducing tubes 62 introduce non-oxidizing gas into the reaction chamber 56 to expedite condensation of the SiO vapor generated by the reaction.

Similarly to the device of Fig. 1, a SiO collection device 70 collects fine SiO particles produced within the reaction chamber 56. The SiO collection device 70 defines a collection chamber 72 which is connected to the reaction chamber 56 in the furnace by means of a SiO collection duct 74. The collection chamber 72 is maintained at a pressure lower than atmospheric pressure by means of a vacuum pump 80 connected thereto through a vacuum duct 82. Since the reaction chamber 56 communicates with the collection chamber via the collection duct 74, it is also held at a pressure lower than atmospheric pressure.

A SiO collection filter 84 is attached to the end of the vacuum duct 82 inserted into the collection chamber. The collection filter 84 serves to collect the fine SiO particles introduced into the collection chamber 72 via the collection duct 74.

In the SiO producing process according to the present invention, the reagent mixture includes a SiO₂-containing material and a Si- or C-containing material. Preferably, the SiO₂ in the SiO₂-containing material is of high purity so as to produce fine SiO particles with high purity. High-purity SiO₂ can be prepared from high-purity natural quartz, water glass and so forth by reaction with acid or CO₂ gas. As an alternative, SiO₂-containing oxide powers, such as zirconia (ZrO₂ . SiO₂) powder, mullite (3Aℓ₂O₃ . 2SiO₂) powder, wollastonite (CaO . SiO₂) powder and so forth, can be used as the SiO₂-containing material. In view of industrial application, SiO₂-containing oxide powers are preferred since by-products of high purity, such as zirconia (ZrO₂), alumina (Aℓ₂O₃), calcia (CaO) and so forth can be produced during production of SiO.

In addition, metallic silicon powder or a carboniferous material, such as petroleum, coke, coal pitch, carbon-black organic resins and so forth are mixed with the aforementioned SiO₂-containing material. If desired, a mixture of metallic silicon power and a carboniferous material can be mixed with the SiO₂-containing material.

In the process according to the present invention, non-oxidizing gas is used to form a non-oxidizing atmosphere for heat-treatment of the reagent mixture. This non-oxidizing gas induces condensation of the SiO vapor generated during the heat-treatment into fine grains. Gaseous N₂, Ar, CO and so forth may be used as the non-oxidizing gas.

In both of the devices of Figs. 1 and 2, heat-treatment of the reagent mixture (the mixture of SiO₂-containing material and the Si- and/or C-containing reagent) is performed in a non-oxidizing atmosphere under a pressure below 0.1 bar. Heating temperature is in the range of 1300^{o}C to 2000^{o}C. During heat-treatment under the conditions set forth above, reactions expressed by the following formulas occur:

$\text{SiO₂(ℓ,s) + C(s) → SiO(g) + CO(g) (1)}$

$\text{SiO₂(ℓ,s) + Si(s) → 2SiO₂ (2)}$

At atmospheric pressure, the temperature needed to induce the reaction of formula (1) is greater than or equal to 1750^{o}C. By lowering the pressure to no more than 0.1 bar, the required temperature drops to about 1640^{o}C and by further lowering the pressure to below 0.01 bar, the required temperature drops further to about 1540^{o}C. As will be appreciated herefrom, at low pressures, the temperature necessary for reaction is decreased.

The temperature range of 1300^{o}C to 2000^{o}C is preferred for effective SiO production and, at the same time, for producing the desired by-product. If the temperature is lower than 1300^{o}C, SiO vapor cannot be generated. On the other hand, if the temperature is higher than 2000^{o}C, sintering occurs in the mixture, which interferes with generation of SiO vapor. Furthermore, unnecessarily high heat is obviously wasteful in view of SiO production costs.

The non-oxidizing gas entering the reaction chamber displaces the SiO vapor from the surface of the mixture and effectively and quickly cools the SiO vapor to induce condensation into fine grains. Furthermore, the flow of the non-oxidizing gas from the reaction chamber to the collection chamber driven by the vacuum pressure effectively transports the condensed fine-grained SiO into the collection chamber.

The preferred molar rate or ratios of the Si-and/or C-containing material relative to the SiO₂-containing material is 0.4 to 2.0. Furthermore, the preferred volumetric rate or ratios of the non-oxidizing gas introduced into the reaction chamber in relation to the generated SiO vapor is in the range of 0.5 to 500.

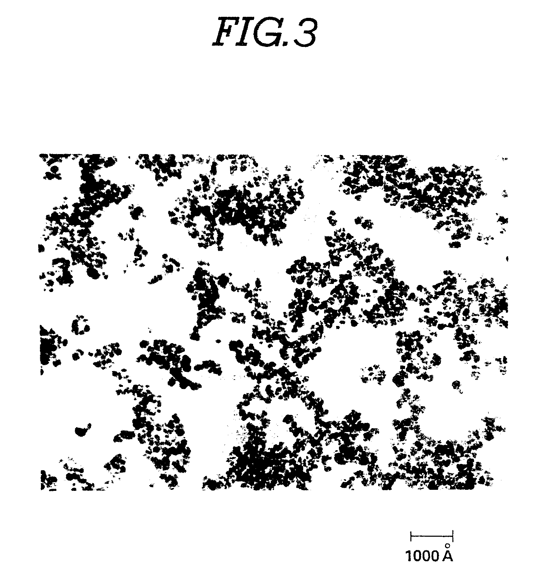

Fig. 3 is a electroscopic photograph of the fine-grained SiO produced during production process according to the invention. The grain size of the SiO particles was less than or equal to 1 µm (1000Å). Under better conditions, it would be possible to obtain SiO of a uniform grain size of 100Å to 200Å. The color of the SiO obtained was mud yellow. The obtained SiO was amorphous. When this fine SiO is treated under atmosphere, it changes into white SiO₂.

### EXAMPLE 1

In order to prove the efficiency of the SiO producing process according to the invention, experiments were performed with the SiO producing device of Fig. 1. Experiments were performed with SiO₂ powder containing 99.5% SiO₂, zircon powder containing 99.5% ZrO₂ and SiO₂, and wollastonite powder containing 99.5% CaO and SiO₂. The rate or ratios of Si- and/or C-containing material, heating conditions and results are shown in the following table I. The yield of SiO is given in relation to theoretical yield in weight percent (wt%).

SiO producing process according to the conventional art was also use so as to obtain results for comparison. The SiO yields were compared to prove the efficiency of the inventive process.

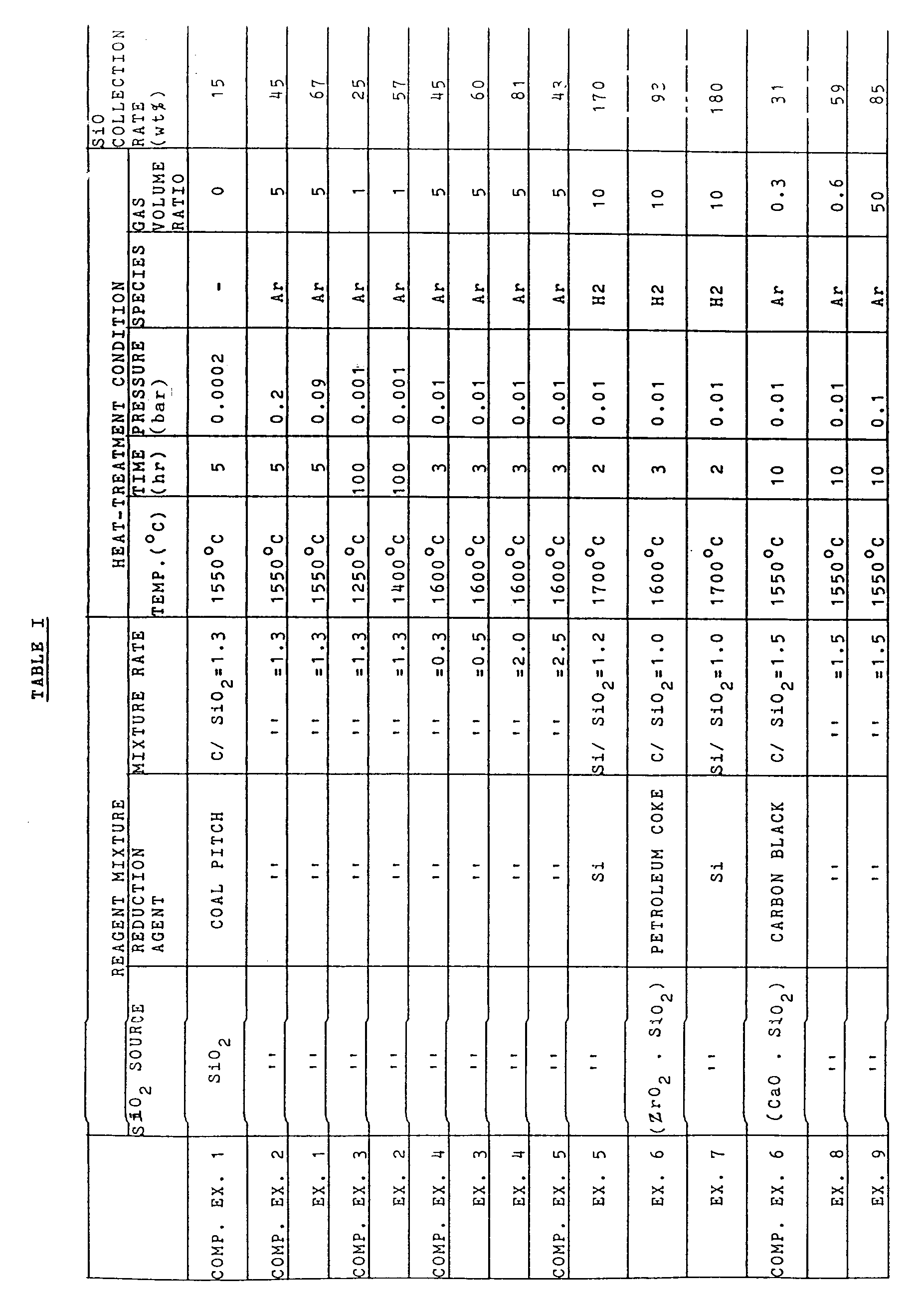

As will be appreciated from the TABLE I above, the yield of fine-grained SiO is remarkably improved by the inventive process.

### EXAMPLE 2

Another experiments were performed using zircon powder containing 99.5% ZrO₂ and SiO₂. Average grain size of the zircon powder was 0.95 µm. The zircon powder was mixed with carbon-black which is available in the market under the tradename "SHI-SUTOU 6" from Tokai Carbon K.K. The grain size of the carbon black was 210Å. A uniform mixture of zircon power and the carbon-black was prepared. The mixture was shaped into a solid cylindrical mass of 15 mm in diameter x 300 mm high. A plurality of cylindrical masses were prepared. The SiO producing process according to the present invention was performed utilizing the SiO producing device of Fig. 2 under the conditions shown in the following TABLE II. In these experiments, the purity of the zirconia powder produced as a by-product and the yield of SiO were checked.

The mol ratio (C/SiO₂) of SiO₂ in the zircon powder and C in the carbon-black was adjusted to be 1.2. The yield of SiO is given in relation to theoretical yield in percent by weight (wt%). Ar gas was used as a non-oxidizing gas in volumetric rate or ratios of 10:1 relative to the SiO vapor.

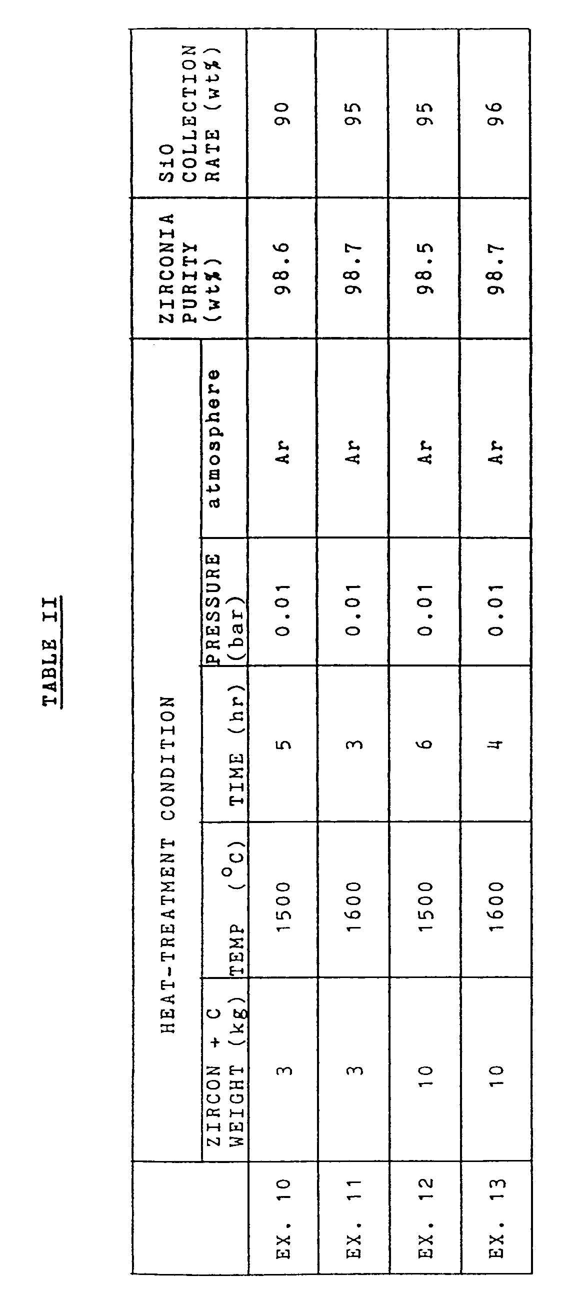

As will be appreciated from the foregoing experiments, the SiO producing process according to the present invention provides a higher SiO yield than the prior art. Therefore, by utilizing the inventive process in industry, the efficiency of fine-grained SiO production can be increased. Furthermore, in parallel to the production of fine-grained SiO, high purity by-products, such as zirconia, alumina, calcia and so forth can be obtained.

The following disclosure is directed to the preferred embodiments of the SiO manufacturing processes and devices for industrial implementation of the aforementioned process of SiO production according to the present invention.

Continuous operation of the producing plant or device is regarded as an essential factor in view of production capacity and efficiency. Therefore, the following embodiments are directed to continuous SiO production.

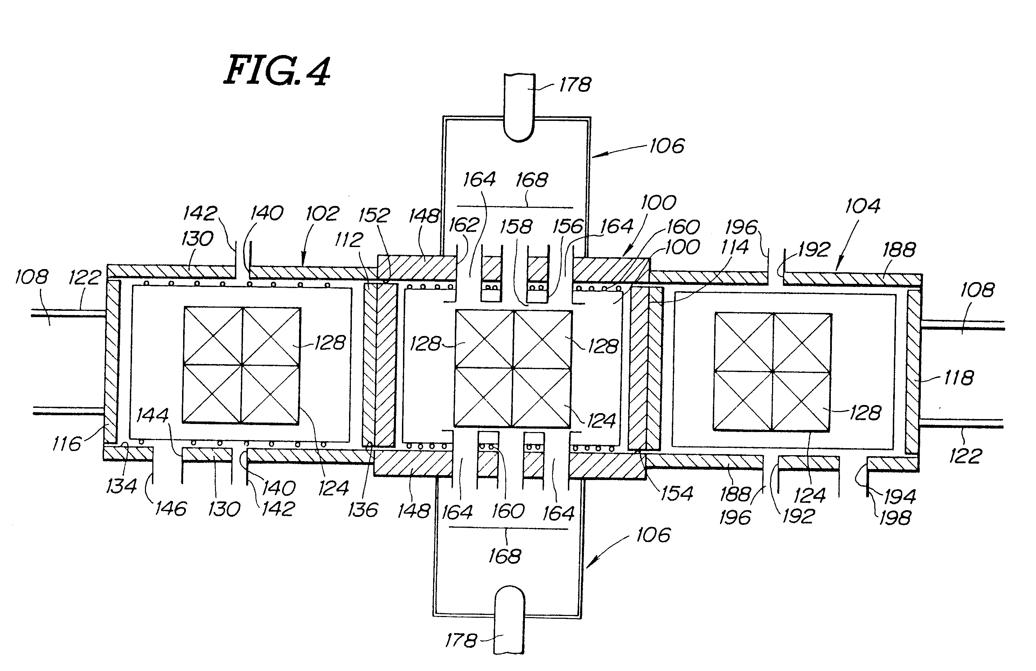

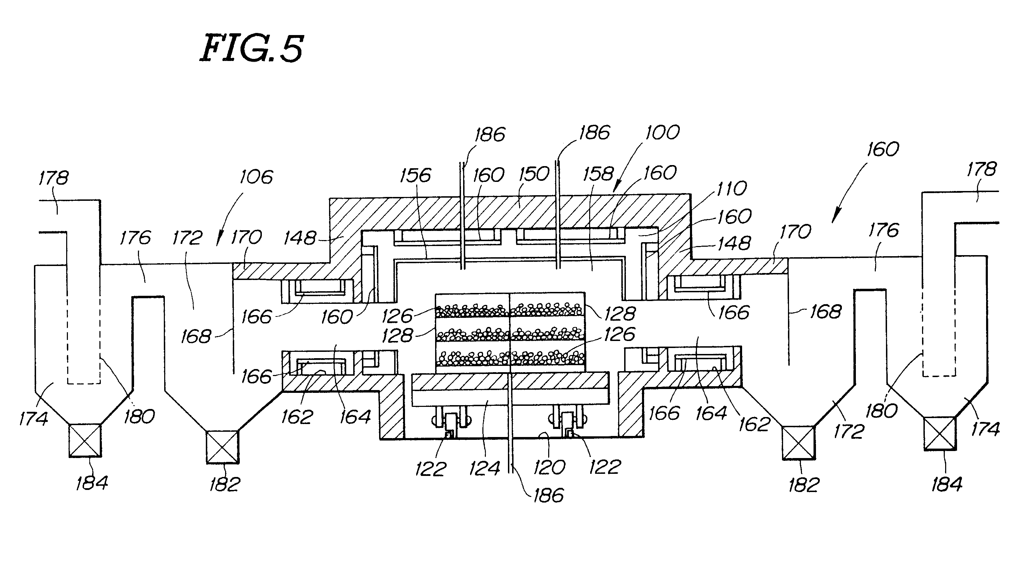

Figs. 4 and 5 show another embodiment of a SiO manufacturing device according to the present invention. The first embodiment of the SiO manufacturing device generally comprises a heating furnace 100, a pre-heating chamber 102, a cooling chamber 104, and SiO collection chambers 106. The pre-heating chamber 102, the heating furnace 100 and the cooling chamber 104 are arranged in-line along a platform 108. A furnace chamber 110 in the heating furnace 100 is connected to the pre-heating chamber 102 and the cooling chamber 104. Doors 112 and 114 separate the pre-heating chamber 102 from the furnace chamber 110 and the furnace chamber from the cooling chambers 104. The other end of the pre-heating chamber 102 is provided with a door 116. Similarly, the other end of the cooling chamber 104 is closed by a door 118.

A pair of rails 122 are fixedly secured to the floor 120 of the platform 108, thus defining a railway extending through the pre-heating chamber 102, the furnace chamber 110 and the cooling chamber 104. One or more carriages 124 run along the railway carrying a reagent mixture 126. As set forth above, the reagent mixture 126 is composed of a SiO₂-containing material, such as high-purity SiO₂ powder, zircon powder, mullite powder, wollastonite powder and so forth, and a Si-and/or C-containing material, such as metallic silicon, petroleum, coke, coal pitch, carbon-black, organic resin and so forth. This reagent mixture is received within a material container 128. A plurality of the material containers 128 are mounted on the carriage 124 to be carried along the railway 122.

In order to facilitate continuous operation of the SiO producing device it would be preferable to provide more than three carriages 124, each transporting a plurality of reagent mixture containers 128. The carriages 124 may driven step-wise so as to stop at the pre-heating chamber 102, the furnace chamber 110 and the cooling chamber 104 for a predetermined period of time. The period of time the carriages 124 spend in each chamber would be determined according to the heat-treatment time needed to produce fine-grained SiO in the furnace chamber 110.

The pre-heating chamber 102 is defined by vertically extending side walls 130 and a ceiling (not shown). The pre-heating chamber 102 has an entrance opening 134 and an exit opening 136 respectively closed by doors 116 and 112. The side walls 130, the ceiling and the doors 112 and 116 are provided with heat-insulating liners. Alternatively, the side walls 130, the ceiling and the doors 112 and 116 can be made of a substance containing a heat-insulating component. Furthermore, if necessary, the side walls 130 and the ceiling may be provided with cooling water passages extending therethrough for effective cooling.

A heater means 130 is disposed within the pre-heating chamber 102. As will be seen from Fig. 4, the heater means 130 comprises heat generators, such as a high-frequency coil, resistance heater or the like, arranged on either side of the path of the carriages 124. One or more non-oxidizing gas inlets 140 in the side wall 130 and/or the ceiling admit non-oxidizing gas in the pre-heating chamber 102. The non-oxidizing gas inlets 140 are connected to induction pipes 142 connected in turn to a non-oxidizing gas source (not shown). An exhaust port 144 in the side wall 130 or the ceiling is connected to an exhaust pipe 146 to vent the inert gas atmosphere.

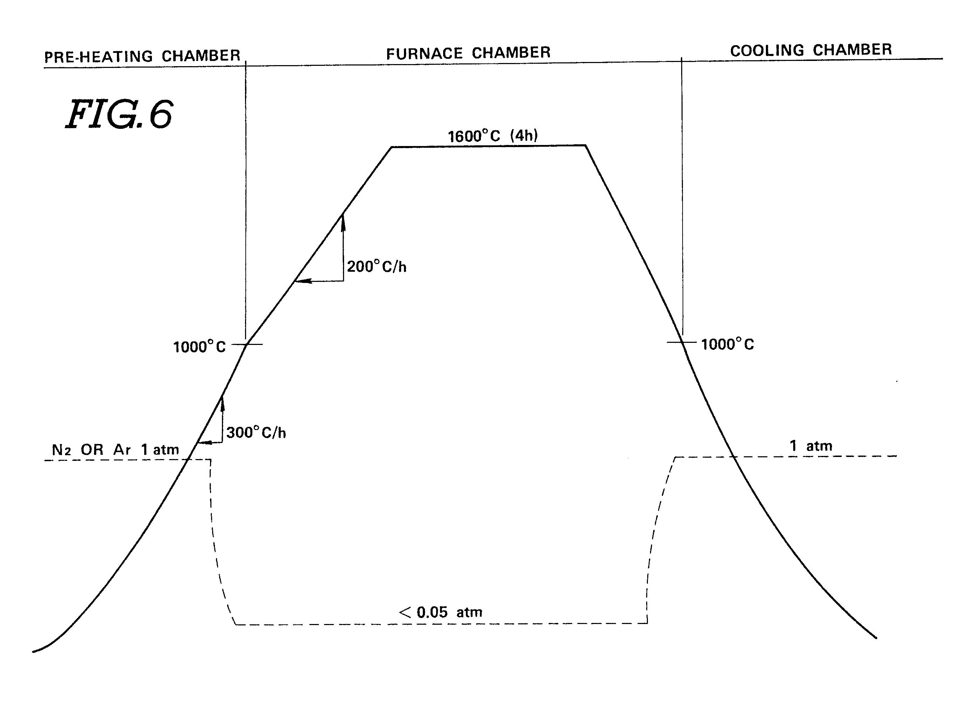

The doors 112 and 116 allow the carriage 124 with the reagent mixture containers 128 to pass when open and insulate the pre-heating chamber 102 from the atmosphere and from the furnace chamber during pre-heating when closed. As shown in Fig. 6, pre-heating is performed at a temperature of approximately 1000 ^{o}C.

It would be convenient to provide actuators for the doors 112 and 116 for automatically opening and closing the doors. More preferably, the device may include a door control system including sensors for detecting when carriages 124 are approaching the entrance opening 134 and the exit opening 136 and automatically activating the actuators to open and close the doors. In this case, the progress of the carriages 124 along the railway 122 will be controlled.

Side walls 148 and a ceiling 150 of the heating furnace 100 define the furnace chamber 110. Similarly to the pre-heating chamber 102, the furnace chamber 110 has an entrance opening 152 and an exit opening 154. The entrance opening 152 adjoins the exit opening 136 of the pre-heating chamber 102. Communication between the pre-heating chamber 102 and the furnace chamber 110 is established and blocked depending upon the position of the door 112. Likewise, the exit opening 154 of the furnace chamber 110 is closed by the door 114. The side walls 148, the ceiling 150, the door 114 are provided with heat-insulating liners, or are made of a substance containing a heat-insulating component.

A muffle 156 in the furnace chamber 110 surrounds the carriage 124 when in the heating position. The muffle 156 defines a reaction chamber 158 in which the reagent mixture reacts to generate the SiO vapor.

A heating means 160 installed in the furnace chamber 110 surrounding the muffle 156 heats the reagent mixture on the carriage 124 within the reaction chamber 158 to a temperature sufficient to generate SiO vapor, i.e. in a temperature range of 1300 ^{o}C to 2000 ^{o}C as set forth with respect to Fig. 1. Similarly to the heating means in the pre-heating chamber 102, the heating means 160 of the furnace chamber 110 may be high-frequency coils, resistance heaters, or the like arranged along both sides of the carriage path.

The side walls 150 have communication passages 162 which connect the furnace chamber 110 to the SiO collection chambers 106. SiO collection ducts 164 extend from the muffle 156 and pass through the communication passages 162 to establish communication between the reaction chamber 158 and the SiO collection chamber 106. Auxiliary heaters 166 are provided within the communication passages 162 surrounding the SiO collection pipes 164. The auxiliary heaters 166 heat the SiO collection pipes to keep the SiO vapor generated in the reaction chamber 158 in vapor form.

Heat insulator plates 168 oppose the outlet of the SiO collection pipes 164. The heat insulator plates 168 extend downward from extensions 170 of the side walls.

Each SiO collection chamber 106 is divided into two sections 172 and 174 communicating with each other through a communication passage 176 near the ceilings of the sections. A vacuum duct 178 is connected to a vacuum source, such as vacuum pump (not shown), and inserted into the section 174 of the SiO collection chamber 106 for introducing vacuum pressure. The vacuum duct 178 has a bug-filter 180 at the end inserted into the section 174 of the SiO collection chamber. The bug-filter 180 prevents SiO drawn from the reaction chamber 158 to the SiO collection chamber from flowing through the vacuum duct 178. The sections 172 and 174 of the SiO collection chamber 106 respectively have outlet valves 182 and 184 for removing the collected SiO. To facilitate removal of the collected SiO, the floors of the sections 172 and 174 of the SiO chambers are designed to act as hoppers.

The SiO yield may be taken to other sections of the factory for further treatment, packaging and so forth.

In order to preserve the non-oxidizing atmosphere in the reaction chamber 158, non-oxidizing gas has to be added during heat-treatment of the reagent mixture. Therefore, one or more non-oxidizing gas induction pipes 186 pass through the furnace walls. In the shown embodiment, the non-oxidizing gas induction pipes 186 extend into the furnace chamber 110 through the ceiling and the floor of the carriage platform. Each induction pipe extending through the ceiling of the furnace 100 passes through the muffle 156 to the reaction chamber 158. On the other hand, the induction pipes 186 extending through the floor of the carriage platform may be vertically movable so that it may pass through the carriage and discharge the non-oxidizing gas directly into the reagent mixture containers 128 on the carriage 124. The pipe 186 extending through the floor may be lowered while the carriage 124 is moving so as not to interfere with the carriage's travel. Alternatively, the carriage 124 may have a discharge nozzle, the upper end of which is directed toward the containers thereon and the lower end of which extend down through the carriage floor. The discharge nozzle carried by the carriage is connected to the induction pipe 186 by means of an appropriate coupler or connector when the carriage 124 is properly positioned for heat-treatment.

Similarly to the foregoing pre-heating chamber 102, the cooling chamber 104 is defined by vertically extending side walls 188 and a ceiling (not shown). One or more non-oxidizing gas induction ports 192 and an exhaust port 194 for inert gas replacement and exhausting of the non-oxidizing gas pass through the side walls 188. The induction ports 192 are connected to a non-oxidizing gas source through non-oxidizing gas induction pipes 196. On the other hand, the exhaust port 194 is connected to an exhaust pipe 198.

The heat distribution in the pre-heating chamber 102, the furnace chamber 110 and the cooling chamber 104 is illustrated in Fig. 6. As shown in Fig. 6, the reagent mixture 126 on the carriage 124 is heated to about 100^{o}C in the pre-heating chamber 102. The pre-heating chamber 102 is at atmospheric pressure, i.e. 1 atm. Non-oxidizing gas, e.g. N₂ gas or Ar gas, is introduced into the pre-heating chamber through the non-oxidizing gas inlet 140. Therefore, the reagent mixture 126 is pre-heated under non-oxidizing conditions at atmospheric pressure. In the pre-heating chamber 102, the temperature of the reagent mixture 126 rises at a rate of approximately 300^{o}C per hour.

The carriage 124 carrying the reagent mixture 126 in the container 128 stays within the pre-heating chamber throughout this pre-heating treatment. After a predetermined period of time which should be sufficiently long to preheat the reagent mixture to about 1000^{o}C, the door 112 is actuated to open to allow the carriage 124 to enter the furnace chamber 110. At the same time, the door 116 opens to allow the next carriage 124 to enter the pre-heating chamber.

In the furnace chamber 110, the reagent mixture 126 on the carriage 124 is heated to about 1600^{o}C by means of the heating means 160. The rate of increase in the reagent mixture temperature in the reaction chamber 158 is about 200^{o}C per hour until the reagent mixture 126 is heated to 1600^{o}C. Heat-treatment is performed under a non-oxidizing atmosphere of non-oxidizing gas, e.g. N₂, Ar or the like. The pressure in the furnace chamber 110 is held to approximately 0.05 bar. By such heat treatment, SiO vapor is generated by the reagent mixture 126. SiO vapor is transported by the flow of the non-oxidizing gas to the SiO collection chambers 106 through the SiO collection ducts 164. As the SiO vapor travels to the SiO collection chambers 106, and within the SiO collection chamber 106 itself, the SiO vapor is cooled until it condenses into fine-grained, solid-state SiO.

As set forth above, since the inner end of the vacuum duct 178 for introducing vacuum pressure into the SiO collection chamber 106 and furnace chamber 110 is provided with the bug filter 180, gaseous or particulate SiO will not enter the vacuum duct. Therefore, the problem of pollution does not arise.

The consensed SiO is accumulated in the hoppers in the SiO collection chambers 106. The outlet valves 182 and 184 are then opened to retrieve the collected SiO.

After a predetermined period of time which should be sufficient to remove all of the SiO from the reagent mixture 126, the door 114 is opened to allow the carriage 124 to move into the cooling chamber 104. At the same time, the carriage 124 in the pre-heating chamber 102 enters the furnace chamber for the next SiO producing heat-treatment. Furthermore, the next carriage 124 is moved into the pre-heating chamber 102 for preparation for the next SiO producing heat-treatment in the furnace chamber.

The reagent mixture 126 on the carriage 124 is forcingly cooled by introducing a relatively cool non-oxidizing gas into the cooling chamber 104. Therefore, within the cooling chamber, the non-oxidizing gas serves as cooling medium for the reagent mixture. The cooling chamber 104 is at atmospheric pressured i.e. 1 atm. After being sufficiently cooled, the by-product, such as zirconia, alumina, calcia and so forth, which depends on the starting material such as zircon mullite, wollastonite and so forth, used as an SiO₂-containing material, can be retrieved. The resultant by-product will be of high purity.

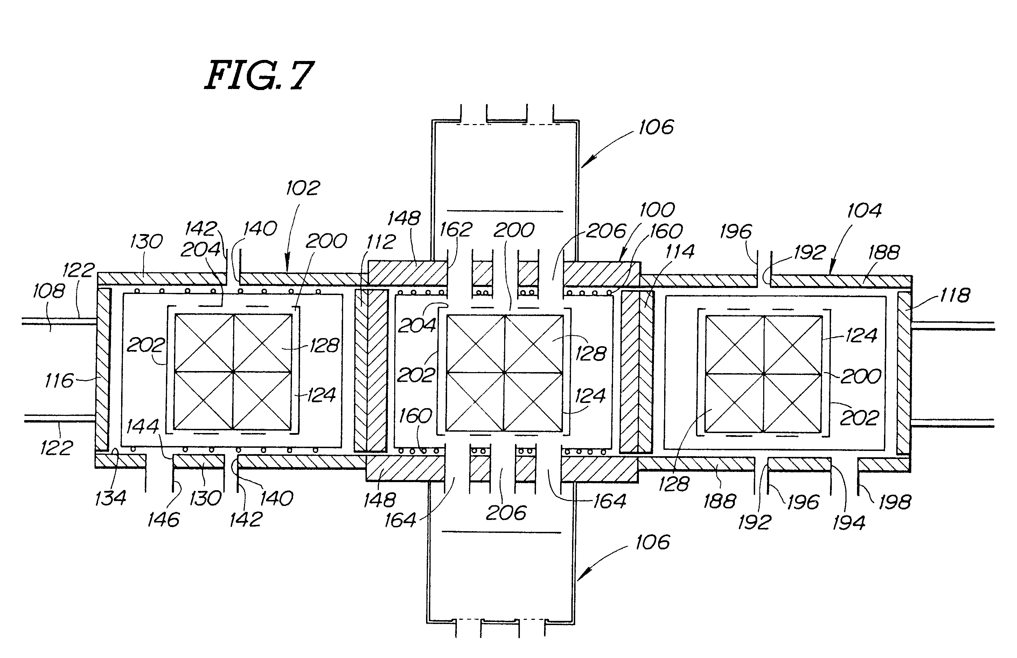

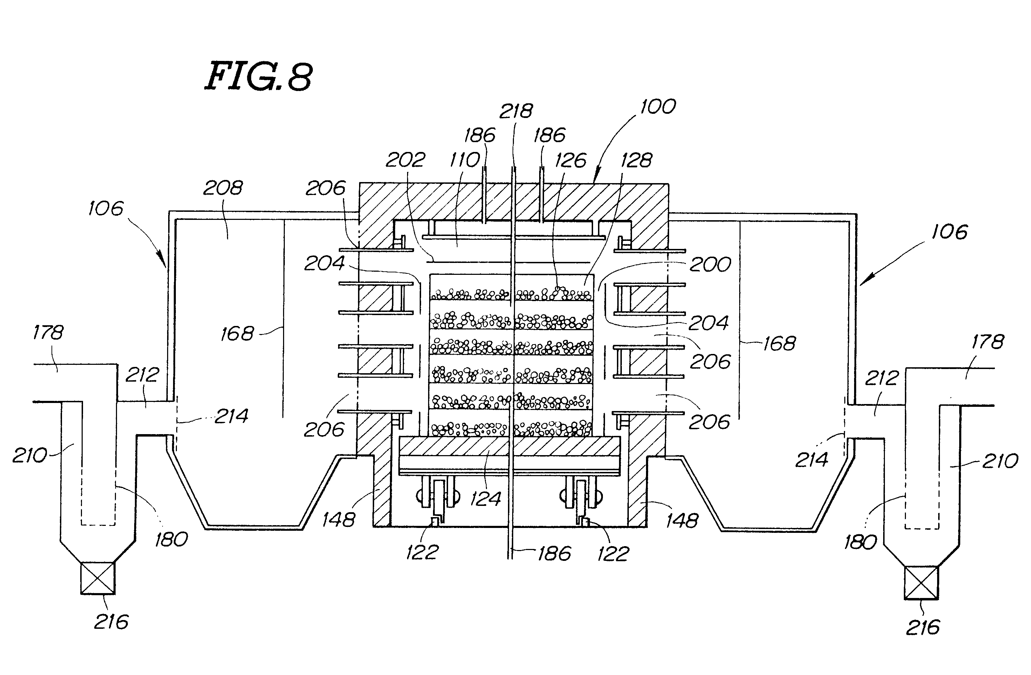

Figs. 7 and 8 show the second embodiment of the SiO producing device according to the present invention. So as to avoid redundant recitation for the same structural components as that in the first embodiment, the same references numerals are used for identifying the same components and neglect detailed disclosures thereabout. This second embodiment of the SiO producing device is adapted to produce larger amount of SiO of fine grain in comparison with that produced in the first embodiment.

Therefore, the carriage 124 is adapted to larger number of the reagent mixture containers 128 with the reagent mixture. So that larger amount of the reagent mixture of the SiO containing material and Si and/or C containing material, larger volume of reaction chamber 200 is required. The reaction chamber 200 is formed by a muffle 202. The muffle 202 is mounted on the carriage 124 to be carried with the reagent mixture 126 in the containers 128 on the carriage. The muffle 202 is formed with a plurality of through openings 204 through which SiO vapor generated during the heat-treatment flows to the SiO collection chambers 106 with the flow of non-oxidizing gas. For higher efficiency of transfer of the SiO vapor to the collection chambers 106, the through openings 204 are formed at the positions respectively corresponding to a plurality of SiO collection ducts 206 extending through the side walls 148 of the furnace 100.

The SiO collection chamber 106 is separated in to two sections 208 and 210, similarly to the foregoing embodiment. A communication passage 212 is provided between the sections 208 and 210 of the SiO collection chamber 106 so as to establish fluid communication therebetween. The communication passage 212 has an end opening to the section 208, to which a filter 214 is fitted. Similarly to the former embodiment the heat insulating plate 168 is provided within the section 208 for insulating heat radiated from the furnace chamber 110. The aforementioned end of the communication passage 212 opens at relatively lower portion of the section 208. The other end of the communication passage 212 opens at the top of the other section 210. The section 210 has smaller volume than that of the section 208. The vacuum duct 178 with the bug-filter 180. The section 210 also has a bottom serving as a hopper with and an outlet valve 216 for removing the fine-grained solid-state SiO from the SiO collection chamber 106.

On the other hand in order to keep the atmosphere in the furnace chamber 110 in non-oxidizing atmospheres which furnace chamber has greater volume than that in the former embodiment for the larger capacity of SiO production, additional non-oxidizing gas induction pipe 218 is provided. The addition non-oxidizing gas induction pipe 218 extends through the ceiling 148 of the furnace and further extends through the ceiling of muffle 202. So as not to interfere travel of the carriage 124, the pipe 218 may be vertically movable toward and away from the carriage 124. For instance, while the carriage 124 is stopped at the position in the furnace, where the heat-treatment for the reagent mixture is to be taken place, the pipe 218 is in the lowered position to discharge non-oxidizing gas into the reaction chamber 200. On the other hand, when the carriage 124 travels from the pre-heating chamber 102 to the furnace chamber 110 or from the furnace chamber to the cooling chamber 104, the pipe 218 is shifted upwardly out of the muffle 202 to allow the carriage 124 with the reagent mixture containers 128 and the muffle 202 to travel.

In the alternative, it would be possible to provide a non-oxidizing gas discharge nozzle for the muffle 202 and connect the discharge nozzle to the pipe 218 by means of an appropriate coupler or connector.

With the aforementioned construction, the SiO production device of Figs. 7 and 8 operates substantially the same manner as that recited with respect to the former embodiment of Figs. 4 and 5.

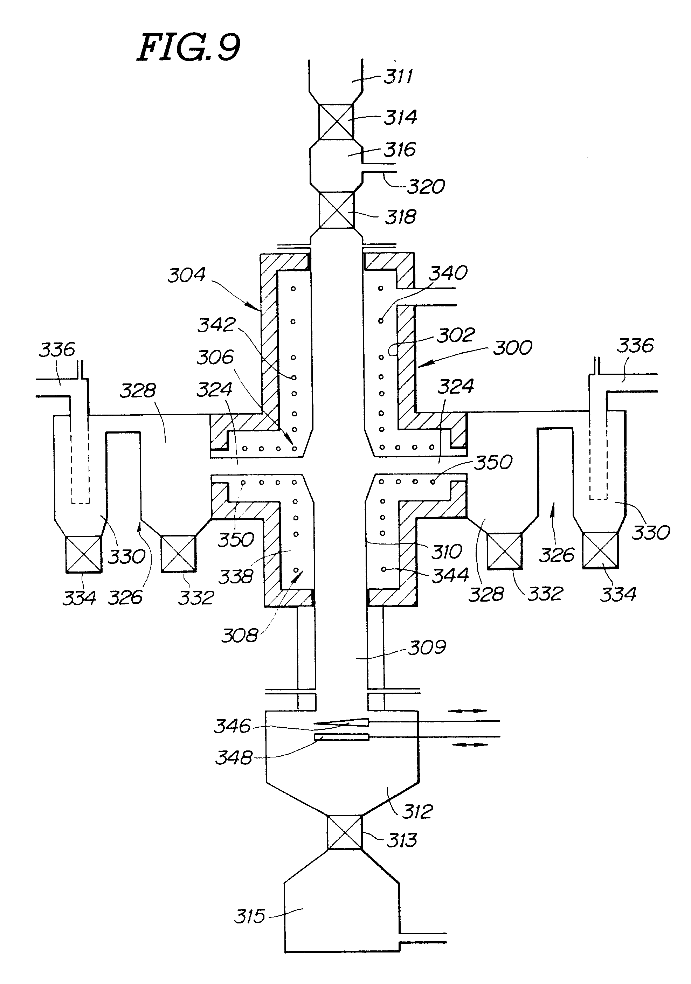

Fig. 9 shows another embodiment of the SiO producing device according to the present invention. In this embodiment, SiO production process according to the present invention is implemented by means of a vertical furnace 300, to which the aforementioned reagent mixture, i.e. mixture of SiO₂ containing material and Si and/or C containing material is supplied continuously for continuous production of fine-grained SiO and by-product.

The vertical furnace 300 of this embodiment defines a vertically extending furnace chamber 302. The furnace chamber 302 is divided into three zones, i.e. a pre-heating zone 304, a heat-treatment zone 306 and a cooling zone 308. An essentially cylindrical muffle 310 extends through overall length of the furnace chamber 302 through the pre-heating chamber 304, the heat-treatment zone 306 and the cooling zone 308. The muffle 310 further extends downwardly through the furnace 300 to form a cylindrical extension 309. The lower end of the cylindrical extension 309 is connected to a by-product collection chamber 312. The by-product collection chamber 312 has an outlet valve 313 for removing the by-product collected and accumulated therein. A gas replacement chamber 315 is defined below the by-product collecting section 312. The gas-replacement chamber 315 is communicated with an exhaust duct.

The top of the muffle 310 is connected to a hopper 312 for continuously supplying the reagent mixture, through a supply control valve 314, a gas replacement chamber 316 and a supply control valve 318. The gas replacement chamber 316 is connected to an exhaust duct 320 for exhausting waste gas. Non-oxidizing gas induction pipes 322 are connected to the top of the muffle 310 at the outside of the furnace 300 and at adjacent the lower end of the cylindrical extension 309. The muffle 310 also has a pair of branches 324 which serve as SiO collection ducts. The SiO collection ducts 324 are communicated with SiO collection chambers 326. The SiO collection chambers 326 are defined by outer cell thereof, which outer cells are made of steel plate.

Similarly to the former embodiments, the SiO collection chambers 326 of this embodiment are respectively separated into two sections 328 and 330. Bottoms of the respective sections 328 and 330 are formed to serve as hoppers. Outlet valves 332 and 334 are provided at the bottoms of the sections 328 and 330 for removing the fine-grained SiO collected and accumulated therein.

A vacuum duct 336 is inserted into the section 330 in order to connect the section 330 with a vacuum source (not shown). By the vacuum pressure introduced into the section 330, the furnace chamber 302 and the interior of the muffle 310 are maintained at vacuum pressure.

As will be seen from Fig. 9, the muffle 310 has essentially smaller diameter than the inner diameter of the furnace 300 to define therebetween a heating chamber 338. Heaters 340, 342 and 344 are provided within the heating chamber 338 surrounding the muffle 310. The heater 340 is disposed within the pre-heating zone 304 for heating the reagent mixture in the pre-heating zone at a temperature upto approximately 1000^{o}C. The heater 342 is disposed within the heat-treatment zone 306 is adapted to heat the reagent mixture passing the heat-treatment zone at an essentially constant temperature. i.e. 1600^{o}C. On the other hand, the heater 344 in the cooling zone 344 generates substantially low temperature in comparison with that generated in the pre-heating zone 304 and the heat-treatment zone 306.

Burden supports 346 and 348 are provided within the by-product collection chamber 312 opposing the lower end of the cylindrical extension 309 of the muffle 310. The burden supports 346 and 348 are respectively movable perpendicularly to the axis of the furnace so as to adjust the amount of the by-product falling into the by-product collection chamber 312 and whereby adjusting speed of downward travel of the reagent mixture filled in the muffle 310. The passage area defined by the burden support 346 and 348 may be controlled in relation to the path area defined in the supply control valves 314 and 318.

In the SiO producing process according to the invention with the SiO producing device of Fig. 9, the internal space of the muffle 310 is filled by the reagent mixture. The reagent mixture in the internal space of the muffle 310 travels through the pre-heating zone 304, the heat-treatment zone 306 and the cooling zone 308. During this process, non-oxidizing gas is introduced into the internal space of the muffle 310 so that heat-treatment for generating SiO producing process under non-oxidizing atmosphere. Pressure in the furnace chamber 302 is maintained at vacuum by the effect induction of the vacuum through the vacuum duct 336 into the SiO collection chamber 326.

Similarly to the foregoing embodiment, the reagent mixture in the muffle 310 is pre-heated in the pre-heating zone at about 1000^{o}C along the heat distribution curve illustrated in Fig. 6, during downward travel. The reagent passing the pre-heating zone 304 subsequently enter the heat-treatment zone 306. In the region in the heat-treatment zone, where the SiO collection ducts 324 are provided, the temperature of the reagent mixture is maintained constant at about 1600^{o}C which is high enough to cause generation of SiO vapor. The Sio vapor generated from the reagent mixture due to thermal reaction caused in the reagent mixture, is drawn into the SiO collection chamber with the non-oxidizing gas flow. Heaters 350 provided surrounding the SiO collection ducts 324 serves for maintain the SiO in vapor state. In the SiO collection chamber 326, the SiO vapor is cooled condensed into fine-grained solid-state SiO. By continuously processing the reagent mixture, fine-grained SiO can be accumulated within the SiO collection chamber 326. The collected SiO is removed from the SiO collection chamber 326 through the outlet valve 328.

On the other hand, the remaining material from which the SiO is removed are transferred to the cooling zone 306 to be cooled. The cooled SiO removed material serves as by-product of substantially high purity. Such by-product is accumulated within the by-product collecting chamber 312 and removed therefrom through the outlet valve 313.

As will be appreciated herefrom, the embodiment of Fig. 9 facilitates continuous processing for SiO production and can provide substantially high efficiency in production of fine-grained SiO.

Therefore, the present invention fulfills all of the objects and advantages sought therefor.

## Claims

1. A method for producing a fine-grained silicon monoxide powder in a reaction system which includes a reaction chamber, a collection chamber and a duct establishing communication between the reaction and collection chambers, said method being characterized in that is comprises the steps of :
providing a mixture of a silicon dioxide containing material and metallic silicon and/or a carbon containing material in said reaction chamber ;
maintaining said reaction system at pressures lower than or equal to 0.1 bar, while introducing non-oxidizing gas into said reaction chamber to produce an non-oxidizing gas stream from said reaction chamber to said collection chamber ;
heating said mixture in said reaction chamber at elevated temperatures for generating silicon monoxide gas ;
condensing said silicon monoxide gas to form solid state silicon monoxide while transferring said silicon monoxide gas from said reaction chamber to said collection chamber with said non-oxidizing gas stream ; and
collecting said solid state silicon monoxide in said collection chamber.

2. A method as set forth in claim 1, wherein said elevated temperatures are defined in a range from 1300 º C to 2000 º C.

3. A method as set forth in claim 1, wherein said silicon dioxide containing material is selected from the group consisting of zircon (ZrO₂.SiO₂), mullite (3Aℓ₂O₃.2SiO₂), wollastonite (CaO.SiO₂) and silicon dioxide powder of high purity.

4. A method as set forth in claim 3, wherein said carbon containing material is selected from the group consisting of petroleum coke, coal pitch, carbon-black and organic resin.

5. A method as set forth in claim 3, wherein said non-oxidizing gas is selected from the group consisting of N₂ gas, Ar gas and CO gas.

6. A method as set forth in claim 1, which further comprises a step of collecting remaining material mixture as by-product after removing said silicon monoxide.

7. A method as set forth in claim 6, wherein said silicon dioxide containing material is zircon (ZrO₂.SiO₂).

8. A method as set forth in claim 6, wherein said silicon dioxide containing material is mullite (3Aℓ₂O₃.2SiO₂).

9. A method as set forth in claim 6, wherein said silicon dioxide containing material is wollastonite (CaO.SiO₂).

10. A device for producing a silicon monoxide powder by heating a mixture of a silicon dioxide containing material and metallic silicon and/or a carbon-containing material to produce silicon monoxide gas and then cooling said silicon monoxide gas, said device being characterized in that it comprises :
a reaction chamber (16) for containing said mixture ;
a collection chamber (32)
a duct (34) establishing communication between the reaction and collection chambers so as to define a reaction system with said reaction and collection chambers ;
pressure reducing means (40, 42) for maintaining said reaction system at pressures lower than or equal to 0.1 bar ;
gas supply means (22) for introducing non-oxidizing gas into said reaction chamber to be associated with said pressure reducing means for producing an non-oxidizing gas stream from said reaction chamber to said collection chamber ;
a heating unit (24) for heating said mixture in said reaction chamber at elevated temperatures to generate silicon monoxide gas,
wherein said duct serves as means, associated with said pressure reducing means, for condensing said silicon monoxide gas to form solid-state silicon monoxide while transferring said silicon monoxide gas from said reaction chamber to said collection chamber with said non-oxidizing gas stream.

11. A device as set forth in claim 10 which further comprises means for recovering by-product of said reaction in said reaction chamber after said heating process.

12. A process for manufacturing silicon monoxide powder in a reaction system which includes a reaction chamber, a collection chamber and a duct establishing communication between the reaction and collection chambers, said process being characterized in that it comprises the steps of :
preparing a mixture by mixing a silicon dioxide containing material and metallic silicon and/or a carbon containing material ;
maintaining said reaction system at pressures lower than or equal to 0.1 bar ;
introducing non-oxidizing gas into said reaction chamber to produce an non-oxidizing gas stream from said reaction chamber to said collection chamber ;
continuously supplying said mixture into said reaction chamber ;
heating said mixture in said reaction chamber at elevated temperatures for generating silicon monoxide gas ;
transferring silicon monoxide gas generated in said reaction chamber to said collection chamber ;
cooling said silicon monoxide gas to form solid-state silicon monoxide while said silicon monoxide gas is transferred with said non-oxidizing gas stream from said reaction chamber to said collection chamber through said duct ; and
collecting said solid-state silicon monoxide in said collection chamber.

13. A process as set forth in claim 12 which further comprises a step of pre-heating said mixture before supplying the mixture into said reaction chamber.

14. A process as set forth in claim 12 wherein said elevated temperatures are defined in a range from 1300°C to 2000°C.

15. A process as set forth in claim 14, wherein said silicon dioxide containing material is zircon (ZrO₂.SiO₂).

16. A process as set forth in claim 14, wherein said silicon dioxide containing material is mullite (3Aℓ₂O₃.2SiO₂).

17. A process as set forth in claim 14, wherein said silicon dioxide containing material is wollastonite (CaO.SiO₂).

18. A device for manufacturing silicon monoxide powder by heating a mixture of a silicon dioxide containing material and metallic silicon and/or a carbon-containing material to produce silicon monoxide gas and then cooling said silicon monoxide gas, said device being characterized in that it comprises :
a reaction chamber
a collection chamber
a duct establishing communication between said reaction and collection chambers so as to define a reaction system with said reaction and collection chambers :
pressure reducing means for maintaining said reaction system at pressures lower than or equal to 0.1 bar ;
gas supply means for introducing non-oxidizing gas into said reaction chamber to be associated with said pressure reducing means for producing an non-oxidizing gas stream from said reaction chamber to said collection chamber ;
mixing means for mixing a silicon dioxide containing material and metallic silicon and/or a carbon-containing material to prepare a mixture thereof ;
material supply means for continuously supplying said mixture to said reaction chamber
heating means for heating said mixture in said reaction chamber at elevated temperature to generate silicon monoxide gas,
wherein said duct serves as means, associated with pressure reducing means, for cooling and condensing said silicon monoxide gas to form solid-state silicon monoxide while transferring said silicon monoxide gas from said reaction chamber to said collection chamber with said non-oxidizing gas stream.

19. A device as set forth in claim 18, which further comprises means (130) for preheating said mixture before the mixture is supplied into said reaction chamber.

20. A device as set forth in claim 19 wherein said elevated temperatures are defined in a range form 1300ºC to 2000ºC.

21. A device as set forth in claim 18, wherein said material supply means comprises a plurality of carriages (124) adapted to travel through said reaction chamber carrying said mixture.

22. A device as set forth in claim 21, wherein said carriages are adapted to stop within said reaction chamber for a predetermined period of time.

23. A device as set forth in claim 22, wherein said carriage mounts thereon a muffle (156) which receives therein said mixture.

24. A device as set forth in claim 23, which further comprises means for pre-heating said mixture before supplying the mixture into said reaction chamber and means for cooling said reaction chamber after generating said silicon monoxide gas and recovering by-product of said reaction in said reaction chamber.

25. A device as set forth in claim 24, wherein said pre-heating means is provided upstream of said heating means and said reaction chamber cooling means is provided downstream of said heating means, and said pre-heating means, heating means and said reaction chamber cooling means are aligned to form a path for said carriages.

26. A device as set forth in claim 25, wherein one of said carriages is placed within said pre-heating means while the leading carriage stops within said heating means.

27. A device as set forth in claim 26, wherein another carriage is placed within said reaction chamber cooling means while the following carriage stops within said heating means.

28. A device as set forth in claim 19, wherein said pre-heating means, said heating means and said reaction chamber cooling means are associated with each other to define a path for said mixture, which path is communicated with said material supply means for supplying said mixture to said reaction chamber

29. A device as set forth in claim 28, wherein said pre-heating means, said heating means and said reaction chamber cooling means are aligned vertically.

30. A device as set forth in claim 29, wherein said material supply means comprises a hopper communicating with the top of said pre-heating means.

## Patentansprüche

1. Verfahren zum Herstellen eines feinkörnigen Siliciummonoxidpulvers in einem Reaktionssystem, welches eine Reaktionskammer, eine Sammelkammer und eine Leitung, die eine Verbindung zwischen der Reaktionskammer und der Sammelkammer herstellt, einschließt, wobei das Verfahren dadurch gekennzeichnet ist, daß es die Schritte umfaßt:
Bereitstellen eines Gemisches aus einem Siliciumdioxid-haltigen Material und metallischem Silicium und/oder einem Kohlenstoff-haltigen Material in der Reaktionskammer;
das Halten des Reaktionssystems bei Drücken niedriger als oder gleich 0,1 bar, während nicht-oxidierendes Gas in die Reaktionskammer eingeführt wird, um einen nicht-oxidierenden Gasstrom aus der Reaktionskammer in die Sammelkammer zu erzeugen;
Erwärmen des Gemisches in der Reaktionskammer auf erhöhte Temperaturen zum Erzeugen von Siliciummonoxidgas;
Kondensieren des Siliciummonoxidgases, um Siliciummonoxid in festem Zustand zu bilden, während das Siliciummonoxidgas aus der Reaktionskammer in die Sammelkammer mit dem nicht-oxidierenden Gasstrom überführt wird; und
Sammeln des Siliciummonoxids in festem Zustand in der Sammelkammer.

2. Verfahren nach Anspruch 1, worin die erhöhten Temperaturen in einem Bereich von 1300^{o}C bis 2000^{o}C definiert sind.

3. Verfahren nach Anspruch 1, worin das Siliciumdioxid-haltige Material ausgewählt wird aus der Gruppe, bestehend aus Zirkon (ZrO₂ x SiO₂), Mullit (3Al₂O₃ x 2SiO₂), Wollastonit (CaO x SiO₂) und Siliciumdioxidpulver hoher Reinheit.

4. Verfahren nach Anspruch 3, worin das Kohlenstoff-haltige Material ausgewählt wird aus der Gruppe, bestehend aus Petrolkoks, Kohlenpech, Ruß und organischem Harz.

5. Verfahren nach Anspruch 3, worin das nicht-oxidierende Gas ausgewählt wird aus der Gruppe, bestehend aus N₂-Gas, Ar-Gas und CO-Gas.

6. Verfahren nach Anspruch 1, welches ferner einen Schritt des Sammelns von restlichen Materialgemisch als Nebenprodukt nach dem Entfernen des Siliciummonoxids umfaßt.

7. Verfahren nach Anspruch 6, worin das Siliciumdioxid-haltige Material Zirkon (ZrO₂ x SiO₂) ist.

8. Verfahren nach Anspruch 6, worin das Siliciumdioxid-haltige Material Mullit (3Al₂O₃ x 2SiO₂) ist.

9. Verfahren nach Anspruch 6, worin das Siliciumdioxid-haltige Material Wollastonit (CaO x SiO₂) ist.

10. Vorrichtung zum Herstellen eines Siliciummonoxidpulvers durch Erwärmen eines Gemisches aus einem Siliciumdioxid-haltigen Material und metallischem Silicium und/oder einem Kohlenstoff-haltigen Material, um Siliciummonoxidgas zu erzeugen, und dann Kühlen dieses Siliciummonoxidgases, wobei die Vorrichtung dadurch gekennzeichnet ist, daß sie umfaßt:
eine Reaktionskammer (16) zum Enthalten des Gemisches;
eine Sammelkammer (32)
eine Leitung (34),
die eine Verbindung zwischen der Reaktionskammer und der Sammelkammer herstellt, um ein Reaktionssystem mit der Reaktionskammer und der Sammelkammer zu definieren;
druckreduzierende Mittel (40, 42) zum Halten des Reaktionssystems bei Drücken niedriger als oder gleich 0,1 bar;
Gaszufuhrmittel (22) zum Einbringen von nicht-oxidierendem Gas in die Reaktionskammer, um mit den druckvermindernden Mitteln in Verbindung gebracht zu werden, zum Erzeugen eines nicht-oxidierenden Gasstroms aus der Reaktionskammer in die Sammelkammer;
eine Heizeinheit (24) zum Erwärmen des Gemisches in der Reaktionskammer auf erhöhte Temperaturen zum Erzeugen von Siliciummonoxidgas,
worin die Leitung als Mittel in Verbindung mit den druckvermindernden Mitteln dient, um das Siliciummonoxidgas zu kondensieren, um Siliciummonoxid in festem Zustand zu bilden, während das Siliciummonoxidgas aus der Reaktionskammer in die Sammelkammer mit dem nicht-oxidierenden Gasstrom übertragen wird.

11. Vorrichtung nach Anspruch 10, welche ferner Mittel zum Gewinnen eines Nebenproduktes der Reaktion in der Reaktionskammer nach dem Erwärmungsverfahren umfaßt.

12. Verfahren zum Herstellen von Siliciummonoxidpulver in einem Reaktionssystem, welches eine Reaktionskammer, eine Sammelkammer und eine Leitung, die eine Verbindung zwischen der Reaktionskammer und der Sammelkammer herstellt, einschließt, wobei das Verfahren dadurch gekennzeichnet ist, daß es die Schritte umfaßt:
Herstellen eines Gemisches durch Vermischen von einem Siliciumdioxid-haltigen Material und metallischem Silicium und/oder einem Kohlenstoff-haltigen Material;
Halten des Reaktionssystems bei Drücken niedriger als oder gleich 0,1 bar;
Einführen von nicht-oxidierendem Gas in die Reaktionskammer um einen nicht-oxidierenden Gasstrom aus der Reaktionskammer in die Sammelkammer zu erzeugen;
kontinuierliches Zuführen des Gemisches in die Reaktionskammer;
Erwärmen des Gemisches in der Reaktionskammer auf erhöhte Temperaturen zum Erzeugen von Siliciummonoxidgas;
Übertragen des in der Reaktionskammer erzeugten Siliciummonoxidgases in die Sammelkammer;
Abkühlen des Siliciummonoxidgases, um Siliciummonoxid in festem Zustand zu bilden, während das Siliciummonoxidgas mit dem nicht-oxidierenden Gasstrom aus der Reaktionskammer in die Sammelkammer durch die Leitung übertragen wird; und
Sammeln des Siliciummonoxids in festem Zustand in der Sammelkammer.

13. Verfahren nach Anspruch 12, welches ferner einen Schritt des Vorheizens des Gemisches vor dem Zuführen des Gemisches in die Reaktionskammer umfaßt.

14. Verfahren nach Anspruch 12, worin die erhöhten Temperaturen in einem Bereich von 1300^{o}C bis 2000^{o}C definiert sind.

15. Verfahren nach Anspruch 14, worin das Siliciumdioxidhaltige Material Zirkon (ZrO₂ x SiO₂) ist.

16. Verfahren nach Anspruch 14, worin das Siliciumdioxidhaltige Material Mullit (3Al₂O₃ x 2SiO₂) ist.

17. Verfahren nach Anspruch 14, worin das Siliciumdioxidhaltige Material Wollastonit (CaO x SiO₂) ist.

18. Vorrichtung zum Herstellen eines Siliciummonoxidpulvers durch Erwärmen eines Gemisches aus einem Siliciumdioxid-haltigen Material und metallischem Silicium und/oder einem Kohlenstoff-haltigen Material, um Siliciummonoxidgas zu erzeugen, und dann Abkühlen des Siliciummonoxidgases, wobei die Vorrichtung dadurch gekennzeichnet ist, daß sie umfaßt:
eine Reaktionskammer,
eine Sammelkammer,
eine Leitung, die die Verbindung zwischen der Reaktionskammer und der Sammelkammer herstellt, um ein Reaktionssystem mit der Reaktionskammer und der Sammelkammer zu definieren:
druckvermindernde Mittel zum Halten des Reaktionssystems bei Drücken niedriger als oder gleich 0,1 bar;
Gaszufuhrmittel zum Einbringen von nicht-oxidierendem Gas in die Reaktionskammer, um mit den druckvermindernden Mitteln in Verbindung gebracht zu werden, zum Erzeugen eines nicht-oxidierenden Gasstroms aus der Reaktionskammer in die Sammelkammer;
Vermischungsmittel zum Vermischen von einem Siliciumdioxidhaltigen Material und metallischem Silicium und/oder einem Kohlenstoff-haltigen Material, um ein Gemisch daraus herzustellen;
Materialzufuhrmittel zum kontinuierlichen Zuführen des Gemisches in die Reaktionskammer;
Heizmittel zum Erwärmen des Gemisches in der Reaktionskammer auf erhöhte Temperatur zum Erzeugen von Siliciummonoxidgas,
worin die Leitung als Mittel in Verbindung mit dem druckvermindernden Mittel dient, um das Siliciummonoxidgas zu kühlen und zu kondensieren, um Siliciummonoxid in festem Zustand zu bilden, während das Siliciummonoxidgas aus der Reaktionskammer in die Sammelkammer mit dem nicht-oxidierenden Gasstrom übertragen wird.

19. Vorrichtung nach Anspruch 18, welche ferner Mittel (130) zum Vorheizen des Gemisches, bevor das Gemisch in die Reaktionskammer zugeführt wird, umfaßt.

20. Vorrichtung nach Anspruch 19, worin die erhöhten Temperaturen in einem Bereich von 1300^{o}C bis 2000^{o}C definiert sind.

21. Vorrichtung nach Anspruch 18, worin das Materialzufuhrmittel eine Mehrzahl von Wagen (124) umfaßt, die so eingerichtet sind, daß sie durch die Reaktionskammer hindurchgehen, wobei sie das Gemisch transportieren.

22. Vorrichtung nach Anspruch 21, worin die Wagen so eingerichtet sind, daß sie in der Reaktionskammer während eines vorbestimmten Zeitraums anhalten.

23. Vorrichtung nach Anspruch 22, worin auf dem Wagen eine Muffel (156) montiert ist, die darin das Gemisch aufnimmt.

24. Vorrichtung nach Anspruch 23, welche ferner Mittel zum Vorheizen des Gemisches, bevor das Gemisch der Reaktionskammer zugeführt wird, und Mittel zum Kühlen der Reaktionskammer, nachdem in der Reaktionskammer das Siliciummonoxidgas erzeugt und das Nebenprodukt der Reaktion gewonnen wurde, umfaßt.

25. Vorrichtung nach Anspruch 24, worin das Vorheizmittel stromaufwärts von dem Heizmittel angeordnet ist und das Mittel zum Kühlen der Reaktionskammer stromabwärts von dem Heizmittel angeordnet ist und das Vorheizmittel, Heizmittel und Mittel zum Kühlen der Reaktionskammer aneinandergereiht sind, um einen Weg für die Wagen zu bilden.

26. Vorrichtung nach Anspruch 25, worin einer der Wagen sich innerhalb des Vorheizmittels befindet, während der führende Wagen innerhalb des Heizmittels anhält.

27. Vorrichtung nach Anspruch 26, worin ein anderer Wagen sich in dem Mittel zum Kühlen der Reaktionskammer befindet, während der nachfolgende Wagen innerhalb des Heizmittels anhält.

28. Vorrichtung nach Anspruch 19, worin das Vorheizmittel, das Heizmittel und das Mittel zum Kühlen der Reaktionskammer miteinander verbunden sind, um einen Weg für das Gemisch zu definieren, welcher mit dem Materialzufuhrmittel zum Zuführen des Gemisches in die Reaktionskammer in Verbindung steht.

29. Vorrichtung nach Anspruch 28, worin das Vorheizmittel, das Heizmittel und das Mittel zum Kühlen der Reaktionskammer vertikal aneinandergereiht sind.

30. Vorrichtung nach Anspruch 29, worin das Materialzufuhrmittel einen Trichter umfaßt, der mit dem oberen Ende des Vorheizmittels in Verbindung steht.

## Revendications

1. Procédé pour produire une poudre de monoxyde de silicium à grains fins dans un système de réaction qui comprend une chambre de réaction, une chambre de collecte et un conduit établissant une communication entre les chambres de réaction et de collecte, ledit procédé étant caractérisé en ce qu'il comporte les étapes consistant à :
introduire un mélange d'un matériau contenant du dioxyde de silicium et du silicium métallique et/ou un matériau contenant du carbone dans ladite chambre de réaction ;
maintenir ledit système de réaction à des pressions inférieures à ou égales à 0,1 bar tout en introduisant du gaz non oxydant dans ladite chambre de réaction pour produire un courant de gaz non oxydant depuis ladite chambre de réaction vers ladite chambre de collecte ;
chauffer ledit mélange dans ladite chambre de réaction à des températures élevées pour générer du monoxyde de silicium gazeux ;
condenser ledit monoxyde de silicium gazeux pour former du monoxyde de silicium à l'état solide tout en transférant ledit monoxyde de silicium gazeux depuis ladite chambre de réaction vers ladite chambre de collecte avec ledit courant de gaz non oxydant ; et
recueillir ledit monoxyde de silicium à l'état solide dans ladite chambre de collecte.

2. Procédé selon la revendication 1, dans lequel lesdites températures élevées sont comprises entre 1300°C et 2000°C.

3. Procédé selon la revendication 1, dans lequel ledit matériau contenant du dioxyde de silicium est choisi parmi le groupe constitué de zircon (ZrO₂. SiO₂), de mullite (3Al₂O₃.2SiO₂), de wollastonite (CaO.SiO₂) et de poudre de dioxyde de silicium de haute pureté.

4. Procédé selon la revendication 3, dans lequel ledit matériau contenant du carbone est choisi parmi le groupe constitué de coke de pétrole, de poix, de noir de carbone et de résine organique.

5. Procédé selon la revendication 3, dans lequel ledit gaz non oxydant est choisi parmi le groupe constitué du gaz N₂, du gaz Ar et du gaz CO.

6. Procédé selon la revendication 1, comportant une étape de collecte du mélange de matériau subsistant en tant que sous-produit après élimination dudit monoxyde de silicium.

7. Procédé selon la revendication 6, dans lequel ledit matériau contenant du dioxyde de silicium est du zircon (ZrO₂.SiO₂).

8. Procédé selon la revendication 6, dans lequel ledit matériau contenant du dioxyde de silicium est de la mullite (3Al₂O₃.2SiO₂).

9. Procédé selon la revendication 6, dans lequel ledit matériau contenant du dioxyde de silicium est de la wollastonite (CaO.SiO₂).

10. Dispositif pour produire une poudre de monoxyde de silicium en chauffant un mélange d'un matériau contenant du dioxyde de silicium et de silicium métallique et/ou un matériau contenant du carbone pour produire du monoxyde de silicium gazeux et ensuite en refroidissant ledit monoxyde de silicium gazeux, ledit dispositif étant caractérisé en ce qu'il comporte :
une chambre de réaction (16) pour contenir ledit mélange ;
une chambre de collecte (32) ;
un conduit (34) établissant une communication entre les chambres de réaction et de collecte de manière à définir un système de réaction avec lesdites chambres de réaction et de collecte ;
des moyens de réduction de pression (40, 42) pour maintenir ledit système de réaction à des pressions inférieures à ou égales à 0,1 bar ;
des moyens d'alimentation en gaz (22) pour introduire un gaz non oxydant dans ladite chambre de réaction à associer auxdits moyens de réduction de pression pour produire un courant de gaz non oxydant depuis ladite chambre de réaction vers ladite chambre de collecte ;
une unité de chauffage (24) pour chauffer ledit mélange dans ladite chambre de réaction à des températures élevées pour générer du monoxyde de silicium gazeux ;
dans lequel ledit conduit sert de moyen, en association avec lesdits moyens de réduction de pression, pour condenser ledit monoxyde de silicium gazeux pour former du monoxyde de silicium à l'état solide tout en transférant ledit monoxyde de silicium gazeux de ladite chambre de réaction vers ladite chambre de collecte avec ledit courant de gaz non oxydant.

11. Dispositif selon la revendication 10 comprenant en outre des moyens pour récupérer le sous-produit de ladite chambre de réaction après ledit processus de chauffage.

12. Procédé pour produire une poudre de monoxyde de silicium dans un système de réaction qui comprend une chambre de réaction, une chambre de collecte et un conduit établissant une communication entre les chambres de réaction et de collecte, ledit procédé étant caractérisé en ce qu'il comporte les étapes consistant à :
préparer un mélange en mélangeant un matériau contenant du dioxyde de silicium et du silicium métallique et/ou un matériau contenant du carbone ;
maintenir ledit système de réaction à des pressions inférieures à ou égales à 0,1 bar ;
introduire le gaz non oxydant dans ladite chambre de réaction pour produire un courant de gaz non oxydant depuis ladite chambre de réaction vers ladite chambre de collecte ;
délivrer continûment ledit mélange dans ladite chambre de réaction ;
chauffer ledit mélange dans ladite chambre de réaction à des températures élevées pour générer du monoxyde de silicium gazeux ;
transférer le monoxyde de silicium gazeux généré dans ladite chambre de réaction vers ladite chambre de collecte ;
refroidir ledit monoxyde de silicium gazeux pour former du monoxyde de silicium à l'état solide tandis que le monoxyde de silicium est transféré à l'aide dudit courant de gaz non oxydant depuis ladite chambre de réaction vers ladite chambre de collecte à travers ledit conduit ; et
recueillir ledit monoxyde de silicium à l'état solide dans ladite chambre de collecte.

13. Procédé selon la revendication 2, comportant en outre une étape consistant à préchauffer ledit mélange avant de le délivrer à ladite chambre de réaction.

14. Procédé selon la revendication 12, dans lequel lesdites températures élevées sont comprises entre 1300°C et 2000°C.

15. Procédé selon la revendication 14, dans lequel ledit matériau contenant du dioxyde de silicium est du zircon (ZrO₂.SiO₂).

16. Procédé selon la revendication 14, dans lequel ledit matériau contenant du dioxyde de silicium est de la mullite (3Al₂O₃.2SiO₂).

17. Procédé selon la revendication 14, dans lequel ledit matériau contenant du dioxyde de silicium est de la wollastonite (CaO.SiO₂).

18. Dispositif pour produire une poudre de monoxyde de silicium en chauffant un mélange d'un matériau contenant du dioxyde de silicium et du silicium métallique et/ou un matériau contenant du carbone pour produire du monoxyde de silicium gazeux et par refroidissement subséquent dudit monoxyde de silicium gazeux, ledit dispositif étant caractérisé en ce qu'il comporte :
une chambre de réaction
une chambre de collecte
un conduit établissant une communication entre lesdites chambres de réaction et de collecte de manière à définir un système de réaction avec lesdites chambres de réaction et de collecte ;
des moyens de réduction de pression pour maintenir ledit système de réaction à des pressions inférieures à ou égales à 0,1 bar ;
des moyens d'alimentation en gaz pour introduire un gaz non oxydant dans ladite chambre de réaction associés auxdits moyens de réduction de pression pour produire un courant de gaz non oxydant depuis ladite chambre de réaction vers ladite chambre de collecte ;
des moyens de mélange pour mélanger un matériau contenant du dioxyde de silicium et du silicium métallique et/ou un matériau contenant du carbone pour préparer un mélange de ceux-ci ;
des moyens d'alimentation en matériau pour délivrer continûment ledit mélange à ladite chambre de réaction,
des moyens de chauffage pour chauffer ledit mélange dans ladite chambre de réaction à température élevée pour générer du monoxyde de silicium gazeux,
dans lequel ledit conduit sert de moyen, associé aux moyens de réduction de pression, pour refroidir et condenser ledit monoxyde de silicium gazeux sous forme de monoxyde de silicium solide tout en transférant ledit monoxyde de silicium gazeux depuis ladite chambre de réaction vers ladite chambre de collecte avec ledit courant de gaz non oxydant.

19. Dispositif selon la revendication 18, comportant en outre des moyens (130) pour préchauffer ledit mélange avant que ledit mélange soit délivré dans ladite chambre de réaction.

20. Dispositif selon la revendication 19, dans lequel lesdites températures élevées sont comprises entre 1300°C et 2000°C.

21. Dispositif selon la revendication 18, dans lequel lesdits moyens de délivrance de matériau comprennent une pluralité de chariots (124) aptes à se déplacer à travers ladite chambre de réaction transportant ledit mélange.

22. Dispositif selon la revendication 21, dans lequel lesdits chariots sont aptes à s'arrêter à l'intérieur de ladite chambre de réaction pendant une période de temps prédéterminée.

23. Dispositif selon la revendication 22, dans lequel ledit chariot supporte un moufle (156) recevant ledit mélange.

24. Dispositif selon la revendication 23, comportant en outre des moyens pour préchauffer ledit mélange avant délivrance du mélange dans ladite chambre de réaction et des moyens pour refroidir ladite chambre de réaction après génération dudit monoxyde de silicium gazeux et récupération du sous-produit de ladite réaction dans ladite chambre de réaction.

25. Dispositif selon la revendication 24, dans lequel lesdits moyens de préchauffage sont disposés en amont desdits moyens de chauffage et lesdits moyens de refroidissement de la chambre de réaction sont disposés en aval desdits moyens de chauffage, et lesdits moyens de préchauffage, les moyens de chauffage et lesdits moyens de refroidissement de la chambre de réaction sont alignés pour former un trajet pour lesdits chariots.

26. Dispositif selon la revendication 25, dans lequel l'un desdits chariots est disposé à l'intérieur desdits moyens de préchauffage tandis que le chariot de tête s'arrête à l'intérieur desdits moyens de chauffage.

27. Dispositif selon la revendication 26, dans lequel un autre chariot est disposé à l'intérieur desdits moyens de refroidissement de la chambre de réaction tandis que le chariot suivant s'arrête à l'intérieur desdits moyens de chauffage.

28. Dispositif selon la revendication 19, dans lequel lesdits moyens de préchauffage, lesdits moyens de chauffage et lesdits moyens de refroidissement de la chambre de réaction sont associés entre eux pour définir un trajet pour ledit mélange, lequel trajet est en communication avec lesdits moyens d'alimentation en matériau pour délivrer ledit mélange à ladite chambre de réaction.

29. Dispositif selon la revendication 28, dans lequel lesdits moyens de préchauffage, lesdits moyens de chauffage et lesdits moyens de refroidissement de la chambre de réaction sont alignés verticalement.

30. Dispositif selon la revendication 29, dans lequel lesdits moyens de délivrance de matériau comportent une trémie communiquant avec le sommet desdits moyens de préchauffage.
